## Europäisches Patentamt
## European Patent Office
## Office européen des brevets

(19)

(11) Veröffentlichungsnummer: **0 016 941**
**B1**

(12) **EUROPÄISCHE PATENTSCHRIFT**

(45) Veröffentlichungstag der Patentschrift:
**12.05.82**

(21) Anmeldenummer: **80100744.4**

(22) Anmeldetag: **14.02.80**

(51) Int. Cl.³: **B 60 J 3/02**

(54) **Sonnenblende für Fahrzeuge.**

(30) Priorität: **17.03.79 DE 2910631**
**12.01.80 DE 3001062**

(43) Veröffentlichungstag der Anmeldung:
**15.10.80 Patentblatt 80/21**

(45) Bekanntmachung des Hinweises auf die Patenterteilung:
**12.05.82 Patentblatt 82/19**

(84) Benannte Vertragsstaaten:
**BE DE FR GB IT SE**

(56) Entgegenhaltungen:
**DE-A-1 430 197**
**DE-A-2 524 715**
**DE-A-2 633 002**

(73) Patentinhaber: **Gebr. Happich GmbH,**
**Postfach 10 02 49 Clausenbrücke 1,**
**D-5600 Wuppertal 1 (DE)**

(72) Erfinder: **Cziptschirsch, Kurt, Am Heckendorn 43,**
**D-5600 Wuppertal 2 (DE)**

(74) Vertreter: **Rehders, Jochen, c/o Fa. Gebr. Happich**
**GmbH Postfach 10 02 49 Clausenbrücke 1,**
**D-5600 Wuppertal 1 (DE)**

Sonnenblende für Fahrzeuge

Die Erfindung betrifft eine Sonnenblende für Fahrzeuge mit einem als im wesentlichen rechteckiger Blasformkörper ausgebildeten Blendenkörper bzw. einer Blendenkörpereinlage mit bereichsweise in den Innenraum ragenden, teilweise mit Gegensicken verschweißten Sikken und mindestens in einem Eckbereich angeordneten Lager.

Eine derartige Sonnenblende ist in der DE-A-1 430 197 beschrieben. Der hier für die Sonnenblende verwendete Blasformkörper weist einen in eine Ausnehmung eingeklipsten Spiegel auf und im Blasformkörper selber parallel zur Längsrichtung des Spiegels verlaufende, beiderseitige Sicken, wobei im Randbereich des Spiegels auch eine Verschweißung einer umlaufenden Sicke dargestellt ist. Derartige, für Sonnenblenden verwendete Blasformkörper ergeben einen brauchbaren Schutz gegen Aufprallverletzungen, weil sie vollflächig oder weitgehend vollflächig ausgebildet sind. Vollflächige Körper sind verhältnismäßig instabil, weil sie lediglich einen kissenförmigen Aufbau haben. Die in der bekannten Sonnenblende vorgesehenen Sicken können diese Instabilität nur teilweise ausgleichen, weil nur im Bereich des eingeklipsten Spiegels eine Fläche erhöhter Stabilität erreichbar ist durch die zusammengeschweißten, umlaufenden Sicken der beiden gegenüberliegenden Flächen. Die so erreichte Armierung kann jedoch bei einseitig an einem Lager befestigten Sonnenblenden keine ausreichende Stabilität gewährleisten. In diesem Zusammenhang ist zu beachten, daß die Festigkeit der aus thermoplastischem Kunststoff hergestellten Blasformkörper mit ansteigender Temperatur, wie sie sich sehr oft in einem Fahrzeug bildet, stark herabgeht. Besonders kann hierzu angeführt werden, daß im Sommer auch in mittleren Breitengraden bei Sonneneinstrahlung Temperaturen von weit über 50 Grad Celsius eintreten, durch die das Kunststoffmaterial, wenn auch nicht vollständig, erweicht, jedoch an seiner Biegefestigkeit verliert. Dieser Umstand hat trotz verschiedener Verstärkungsausbildungen zu bleibenden Verformungen von Sonnenblenden geführt, wobei Sonnenblenden mit einem Schwenklager einendig absanken und Sonnenblenden mit zwei Lagern, wie Klapplager, sich mittig durchbogen, insbesondere dann, wenn der Sonnenblendenkörper zusätzlich beschwert ist, wie durch einen Make-up Spiegel, Parkscheibe oder Aufnahmetaschen für Utensilien, wie Brillen oder dergleichen. Diese bleibende Verformung tritt sowohl bei hochgeklappter Sonnenblende als auch bei heruntergeklappter Sonnenblende ein und ist in beiden Fällen gleichermaßen unangenehm, da sie zu unansehnlichen und in ihrer Funktion beeinträchtigten Sonnenblenden führt.

Zwar ist schon, wie aus der DE-A-2 633 002 ersichtlich ist, bei einer Sonnenblende für Fahrzeuge mit einer aus Spritzguß erstellten, als Gitterwerk gebildeten Verstärkungseinlage versucht worden, den hier gleichermaßen auftretenden Übelstand dadurch abzustellen, daß im Gitter der Verstärkungseinlage angeordnete Streben als Zugstreben ausgebildet sind und vom Lager ausgehend sich zueinander strahlenförmig aufweitend zum unteren Rand und zu dem lagerabgewandten seitlichen Rahmenbereich der Verstärkungseinlage geführt sind. Solche netzartigen Verstärkungseinlagen erfordern jedoch eine verhältnismäßig dicke Polsterabdeckung aus Schaumstoff, um den Sicherheitsvorschriften zu genügen, wodurch sie, um eine vorbestimmte Dicke der Sonnenblende nicht zu überschreiten, selber verhältnismäßig flach ausgebildet werden müssen und daher in Querrichtung nur eine geringe Stabilität aufweisen. Weiterhin ist eine Sonnenblende mit einer solchen, als Gitterwerk ausgebildeten Verstärkungseinlage verhältnismäßig kompliziert aufgebaut und teuer in der Herstellung.

Der Erfindung liegt die Aufgabe zugrunde, eine aus einem Blasformkörper gefertigte Sonnenblende oder Sonnenblendeneinlage zu schaffen, deren Formbeständigkeit auch bei einer größeren Belastung und bei einer übernormalen Erwärmung sowohl hochgeklappt als auch heruntergeklappt beibehalten wird und die nicht nur im heruntergeklappten Zustand, aufgrund ihrer vollflächigen Ausbildung, einen erhöhten Unfallschutz bildet, sondern auch im hochgeklappten Zustand so verformbar ist, daß keine Verletzungen bei einem Aufprall auf den unteren Rand der Sonnenblende eintreten können. Weiterhin soll die Sonnenblende einfach zu fertigen und zu montieren sein und eine preisgünstige Massenfertigung erlauben.

Diese Aufgabe wird erfindungsgemäß dadurch gelöst, daß wenigstens eine Sicke in Zugbelastungsrichtung vom Lager ausgehend, etwa in Richtung der dem Lager diagonal gegenüberliegenden Ecke des Blasformkörpers verlaufend vorgesehen ist und mit ihren Enden frei in der Oberfläche des Blasformkörpers vor Übergang in den Randbereich endet, daß parallel zum unteren Längsrand des Blasformkörpers die Sicken nicht schneidende weitere Sicken vorgesehen sind und daß nur die in Zugbelastungsrichtung verlaufenden Sicken mit den entsprechenden Gegensicken verschweißt sind.

Die zugaufnehmende Strebe oder Streben nehmen, weil sie vom Festpunkt des Blendenkörpers, nämlich vom Lager ausgehen und in Verformungsrichtung des Blendenkörpers verlaufen, alle auftretenden Belastungen auf. Durch die erfindungsgemäße Ausbildung des Sonnenblendenkörpers bzw. der Sonnenblende kann schon durch den Verlauf der Sicken das Vielfache der praktisch auftretenden Kräfte aufgenommen werden, so daß eine Verformung des Blendenkörpers auch bei stärkerer Belastung nicht eintritt, selbst dann nicht, wenn eine Schwächung der Materialstabilität durch Aufweichen infolge Wärme eintritt. Damit die Sonnenblende in jeder Richtung stabil ist, ist es wichtig, daß die Sicke bzw. Sicken nicht durchlaufend im Blasformkörper angeordnet sind, sondern vor dem Übergang in den Randbereich endet bzw. enden. Bei einem Durchlauf der Sicken bis in den Rand des Blasformkörpers tritt nämlich eine Schwächung ein, weil der Querschnitt durchgehend stark verringert ist. Eine solche Ausbildung der Sicken im Blasformkörper kann in der technischen Wirkung mit einem Filmscharnier verglichen werden, welche in Scharnierrichtung zu einer Schwächung führt. Dies wird bei der erfindungsgemäßen Ausbildung der Sicken vermieden, da der Randbereich des Blasformkörpers, der von Sicken frei ist, stabilisierend in jeder Richtung wirkt und somit eine Verformung des Blasformkörpers sowohl im hochgeklappten als auch im heruntergeklappten Zustand verhindert. Im hochgeklappten Zustand ist der gegen Absinken gefährdeste Bereich der Sonnenblende im Bereich der dem Lager diagonal gegenüberliegenden Ecke zu sehen. Daher ist es in weiterer Ausbildung der Erfindung vorgesehen, zwei Sicken mit Abstand voneinander vom Lager ausgehend unter spitzem Winkel zusammenlaufend bis in die diagonal dem Lager gegenüberliegender Ecke des Blasformkörpers reichend auszubilden, so daß der Bereich zwischen den Sicken einen Träger gleicher Festigkeit bildet. Die beiden Sicken ergeben somit im heruntergeklappten Zustand Zugstreben, die in Belastungsrichtung verlaufen, während im hochgeklappten Zustand zwischen den beiden Sicken ein Träger gebildet ist, der auch bei einer gewissen Labilität des Restes des Blasformkörpers insgesamt eine ausreichende Stabilität bei jeden Bedingungen zu erreichen gestattet.

Zusätzlich zu diesen Sicken können weitere, vom Bereich des Lagers ausgehende Sicken in den unteren Rand und den dem Lager abgewandten seitlichen Körperbereich geführt sein. Die parallel zum unteren Längsrand verlaufenden Sicken sind nicht sehr tief, so daß sie einander nicht berühren. Zwischen dem umlaufenden Rand des Blasformkörpers und allen Sickenenden ist ein Freiraum vorgesehen, der auf den Blasformkörper bezogen, zu einem umlaufenden hohlen Randbereich führt, der erheblich zur Stabilität des Blasformkörpers beiträgt, ohne jedoch die Verformbarkeit des Blasformkörpers bei einem Unfall zu beeinträchtigen.

Weitere Einzelheiten und Vorteile der Erfindung ergeben sich aus der nachstehenden, anhand zweier in der Zeichnung dargestellter Ausführungsbeispiele gegebenen Beschreibung, und es zeigt

Fig. 1 eine Draufsicht auf einen Blasformkörper als Einlage für eine Sonnenblende,

Fig. 2 einen Schnitt gemäß der Linie A-A der Fig. 1 und

Fig. 3 eine zweite Ausführungsform der erfindungsgemäßen Sonnenblende mit einer anderen Anordnung der Sicken.

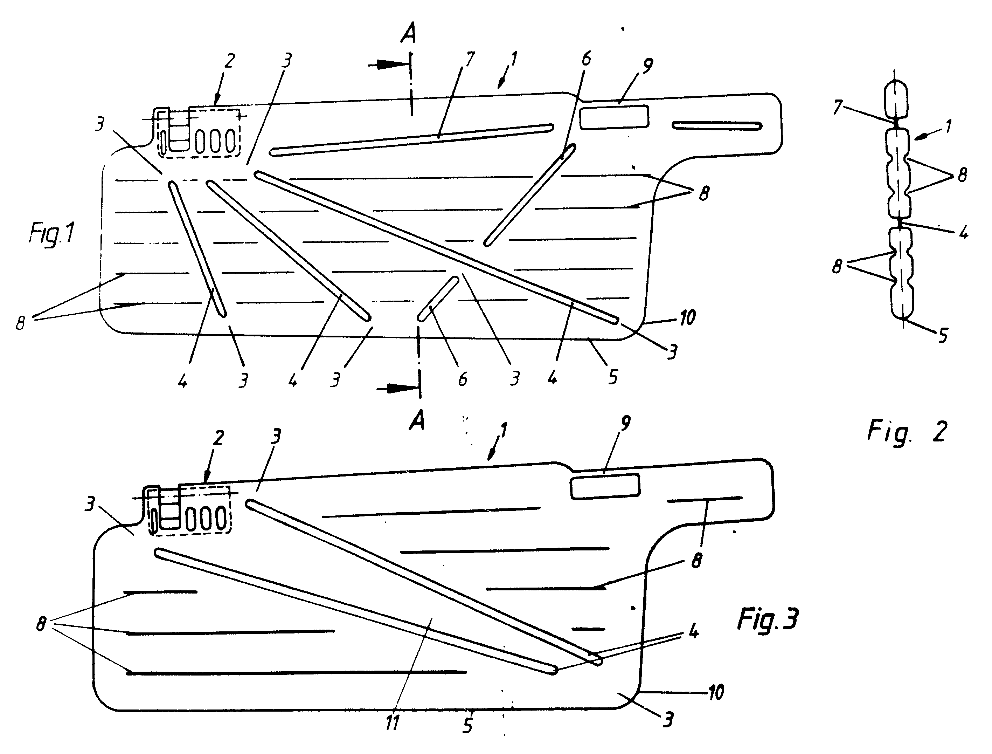

Ein Blasformkörper 1 mit im wesentlichen rechteckiger Form, der im Blasformverfahren aus einem Schlauch oder auch aus zwei Folien gebildet sein kann, besitzt in seiner oberen, in Schaurichtung linken Ecke ein Lager 2, welches in bekannter Weise eine materialeinheitliche Ausformung des Blasformkörpers 1 ist. Vom Lager 2 ausgehend, sind in strahlenförmiger Anordnung drei Sicken 4 vorgesehen, welche in Richtung der dem Lager 2 diagonal gegenüberliegenden Ecke 10 des Blasformkörpers 1 sowie in Richtung des unteren Randes 5 verlaufen. Sowohl im Bereich des Lagers 2 als auch im Bereich des unteren Randes 5 und der Ecke 10 enden die Sicken 4 unter Beibehaltung eines Freiraumes 3 derart, daß der Auslauf der Sicken 4 keine Schwächung des Blasformkörpers 1 in Querrichtung zu den Sicken 4 hervorrufen kann. Die Sicken 4 stabilisieren den Blasformkörper 1, insbesondere auf Zug in Richtung ihres Verlaufs. und zwar nehmen sie eine Last auf, welche von den Bereichen des Blasformkörpers 1 ausgehen, die vom Lager 2 abgekehrt sind. Eine zusätzliche Verstärkung quer zu den Sicken 4 wird durch eine weitere Quersicke 6 erreicht. Auch hier sind jeweils zwischen den Sicken 4 bzw. der Quersicke 6 und dem Randbereich des Blasformkörpers 1 Freiräume 3 eingeschaltet. Die Quersicke 6 endet im oberen Randbereich des Blasformkörpers 1 in der Nähe eines Gegenlagers 9, welches als lösbares Lager ausgebildet ist und ein Verschwenken der Sonnenblende von der Windschutzscheibe zu einem Seitenfenster gestattet. Eine weitere, vom Lager 2 ausgehende Sicke 7 ist vorgesehen, die in Richtung des Gegenlagers 9 verläuft. Die Sicken 4, 6 und 7 sind, wie aus Fig. 2 ersichtlich, verhältnismäßig breit und tief ausgeprägt ausgebildet und stoßen mit entsprechenden Gegensicken zusammen, mit denen sie in zweckmäßiger Weise verbunden, insbesondere verschweißt sind. Diese Schweißung erhöht erheblich die Stabilität des Blasformkörpers, da gegenseitige Verschiebung der Ober- und Unterfläche hierdurch verhindert wird. Weitere flachere Sicken 8 sind im wesentlichen parallel zueinander und zum unteren Rand 5 vorgesehen und dienen einerseits dazu, die Blasformkörperoberfläche gegen Biegung in Längsrichtung zu stabilisieren, gestatten aber andererseits eine ausreichend ziehharmonikabalgartige Verformung des Blasformkörpers 1 bei einem Aufprall gegen den unteren Rand 5. Die Sicken 8 sowie die Sicken 4, 6 und 7 schneiden sich nicht, sondern bilden zwischeneinander stets Freiräume 3, wobei die Sicken 8 weniger tief ausgebildet sind als die Sicken 4, 6 und 7 und daher Berührung mit den auf der anderen Seite des Blasformkörpers 1 angeordneten entsprechenden Sicken eintreten kann. Der in Fig. 1 dargestellte Blasformkörper 1 ist durch die Sicken 4 zwar sehr gut gegen

Verformungen im heruntergeklappten Zustand gesichert, kann jedoch bei sehr großflächig ausgebildeten Blasformkörpern nicht vollständig verhindern, daß die dem Lager 2 gegenüberliegende Ecke 10 bei starker Erwärmung etwas absinkt. Um diesem Umstand abzuhelfen, ist gemäß einer Variante der Erfindung eine andere Anordnung der Sicken 4 gewählt. Beim in Fig. 3 dargestellten Ausführungsbeispiel sind zwei Sicken 4 vom Bereich des Lagers 2 unter spitzem Winkel aufeinander zulaufend bis in den Bereich der diagonal gegenüberliegenden Ecke 10 geführt. Diese Sicken 4 sind, wie im Ausführungsbeispiel gemäß Fig. 1, so tief eingeprägt, daß sie mit den entsprechenden Gegensicken der anderen Seite des Blasformkörpers 1 verschweißt werden können. Zwischen den Sicken 4 ist durch den gewählten Verlauf der Sicken 4 ein Bereich entstanden, der für in Querrichtung im hochgeklappten Zustand der Sonnenblende auftretende Belastungen einen Träger 11 gleicher Festigkeit bildet. Bekanntermaßen gestattet es diese Trägerausbildung am besten, Spannungsungleichmäßigkeiten im Träger zu vermeiden und aufgrund der gleichmäßigen Beanspruchung und Materialausnutzung eine geringere Durchbiegung zu erhalten. Die in Fig. 3 dargestellte Sonnenblende weist somit gegenüber der in Fig. 1 dargestellten Sonnenblende eine erhöhte Stabilität in hochgeklapptem Zustand auf, während sie im heruntergeklappten Zustand gleichwertig ist. Die zum unteren Rand 5 parallelen Sicken 8 sind im wesentlichen gleich ausgebildet wie die in Fig. 1 dargestellten, mit dem Unterschied, daß im Bereich des Trägers 11 gleicher Festigkeit keine parallelen Sicken angeordnet sein dürfen, da diese das Biegewiderstandsmoment des Trägers 11 herabsetzen würden. Weiterhin sind zwischen den Enden der Sicken 4 und 8 und dem umlaufenden Rand des Blasformkörpers 1 die Freiräume 3 vorgesehen, so daß auf diese Weise eine zusätzliche Stabilität des Blasformkörpers 1 in jeder Richtung gegeben ist.

## Patentansprüche

1. Sonnenblende für Fahrzeuge mit einem als im wesentlichen rechteckiger Blasformkörper (1) ausgebildeten Blendenkörper bzw. einer Blendenkörpereinlage mit bereichsweise in den Innenraum ragenden, teilweise mit Gegensicken fest verbundenen Sicken (4, 7, 8) und wenigstens in einem Eckbereich angeordneten Lager (2), dadurch gekennzeichnet, daß wenigstens eine Sicke (4) in Zugbelastungsrichtung vom Lager (2) ausgehend, etwa in Richtung der dem Lager (2) diagonal gegenüberliegenden Ecke (10) des Blasformkörpers (1) verlaufend, vorgesehen ist und mit ihren Enden frei in der Oberfläche des Blasformkörpers (1) vor Übergang in den Randbereich endet, daß parallel zum unteren Längsrand (5) des Blasformkörpers (1) die Sicken (4) nicht schneidende weitere Sicken (8) vorgesehen sind und daß nur die in Zugbelastungsrichtung verlaufenden Sicken (4, 7) mit den entsprechenden Gegensicken verschweißt sind.

2. Sonnenblende nach Patentanspruch 1, dadurch gekennzeichnet, daß zwei Sicken (4) mit Abstand voneinander vom Lager (2) ausgehend unter spitzem Winkel zusammenlaufend bis in die diagonal dem Lager (2) gegenüberliegende Ecke (10) des Blasformkörpers (1) reichen.

3. Sonnenblende nach Patentanspruch 1, dadurch gekennzeichnet, daß der Bereich zwischen den Sicken (4) einen Träger (11) gleicher Festigkeit bildet.

4. Sonnenblende nach Patentanspruch 1, 2 oder 3, dadurch gekennzeichnet, daß mehrere vom Bereich des Lagers (2) ausgehende Sicken (4, 7) in den unteren Rand (5) und den dem Lager (2) abgewandten, seitlichen Körperbereich geführt sind.

## Claims

1. A sun visor for a vehicle, the visor comprising a visor body, or a visor-body insert, blow-moulded as a substantially rectangular body (1) provided with inwardly directed crimps (4, 7, 8) which extend over regions thereof and some of which are firmly bonded to oppositely disposed crimps, and at least one bearing (2) arranged in ohne of the corner regions, characterized in that at least one crimp (4) emanating from the bearing (2) along the tensile load direction extends substantially in the direction towards the blow-moulded body's (1) corner (10) diagonally opposite the bearing (2) and terminates with its free ends in the surface of the blow-moulded body (1) short off the transition into a border region thereof, that further crimps (8) which do not traverse the crimp, or crimps, (4) are arranged parallel with the lower longitudinal border (5) of the blow-moulded body (1), and in that only the crimp, or crimps, (4, 7) extending along the tensile load direction are welded to the corresponding oppositely disposed crimps.

2. A sun visor according to claim 1, characterized in that two crimps (4) spacedly emanating from the bearing (2) and converging at an acute angle extend to the blow-moulded body's (1) corner (10) diagonally opposite the bearing (2).

3. A sun visor according to claim 1, characterized in that the area between the crimps (4) forms a support (11) of even strength.

4. A sun visor according to claim I or claim 2 or claim 3, characterized in that a number of crimps (4, 7) emanating from the region of the bearing (2) run to the lower border (5) and, respectively, to the body's lateral region remote from the bearing (2).

## Revendications

1. Ecran pare-soleil pour automobiles avec un corps de pare-soleil constitué essentiellement par un corps moulé par soufflage (1), de forme rectangulaire, ou une garniture intérieure de corps de pare-soleil, avec par endroits des moulures (4, 7, 8) faisant saillie dans l'espace intérieur dont certaines sont réunies solidement à des contremoulures et avec un élément de fixation (2) prévu dans la région de l'un des coins au moins, caractérisé par le fait qu'une des moulures (4) au moins est prévue dans le sens de la sollicitation en traction à partir de l'élément de fixation (2) en s'étendant vers le coin (10) opposé suivant une diagonale, à l'élément de fixation (2) du corps moulé par soufflage (1), que cette moulure se termine avec ses extrémités libres à la surface du corps moulé par soufflage (1) avant de pénétrer dans la zone marginale, que parallèment au bord longitudinal inférieur (5) du corps moulé par soufflage (1) il est prévu d'autres moulures (8) qui ne coupent pas les moulures (4), et que seules les moulures (4, 7) qui s'étendent dans le sens de la sollicitation en traction sont soudées avec les contremoulures correspondantes.

2. Ecran pare-soleil selon la revendication 1, caractérisé par le fait que deux moulures (4) partant de l'élément de fixation (2) à une certaine distance l'une de l'autre convergent en formant un angle aigu et s'étendent jusqu'à dans le coin (10) du corps moulé par soufflage opposé, suivant une diagonale à l'élément de fixation (2).

3. Ecran pare-soleil selon la revendication 1, caractérisé par le fait que la zone comprise entre les moulures (4) constitue une poutre (11) d'égale résistance.

4. Ecran pare-soleil selon la revendication 1, 2 ou 3, caractérisé par le fait que plusieurs moulures (4, 7) partant de la zone de l'élément de fixation (2) s'étendent jusqu'au bord inférieur (5) et dans la région latérale du corps moulé qui se trouve à l'extrémité opposée à celle de l'élément de fixation (2).

Fig.1

Fig. 2

Fig.3

0 016 941